# EUROPEAN PATENT APPLICATION

(11) **EP 4 770 149 A1**
(43) Date of publication of application: **01.07.2026**
(21) Application number: 24856702.6
(22) Date of filing: 05.08.2024
(51) Int. Cl.: H04W 4/42, H04W 4/48, H04W 52/38, H04W 52/34, H04W 4/80, G06Q 20/32

(54) **METHOD FOR ADJUSTING OUTPUT OF BEACON SIGNAL ON BASIS OF CONGESTION LEVEL OF VEHICLE**

(30) Priority: 21.08.2023 KR 20230109419
(71) Applicant: Tmoney Co., Ltd., Seoul 04637 (KR)
(72) Inventor: CHO, Jae Hun, Seoul 04637 (KR); KIM, Han Jin, Seoul 04637 (KR); PARK, Sung Bong, Seoul 04637 (KR)
(74) Representative: Høiberg P/S
(86) International application number: PCT/KR2024/011544
(87) International publication number: WO 2025/042089

(57) **Abstract**

Disclosed is a beacon signal strength control method for controlling the strength of a beacon signal transmitted by a beacon provided in a vehicle. The method comprises steps in which: a vehicle terminal provided in a vehicle determines the passenger congestion level of the vehicle; and the beacon transmits the beacon signal at a signal strength determined on the basis of the determined passenger congestion level. The signal strength determined when the passenger congestion level is greater than a predetermined first threshold value is greater than the signal strength determined when the passenger congestion level is less than the first threshold value.

## Description

### Technical Field

The present invention relates to a method for adjusting signal strength of an output signal of a beacon mounted in a vehicle to provide a service, and to a technology for allowing the signal of the beacon to be normally delivered to user terminals of passengers even when the vehicle is crowded with many passengers.

### Background Art

A plurality of passengers may board a vehicle of a public transportation means such as a bus. In order to provide a predetermined transportation service by using a user terminal possessed by a boarded passenger, one or more beacons for transmitting a beacon signal toward the inside of the vehicle may be installed in the vehicle. The user terminal receives the beacon signal and is provided with the transportation service by using information included in the beacon signal.

BLE communication used by a beacon is a wireless electromagnetic wave communication technology using a frequency in a 2.4 GHz band. A Bluetooth beacon device sends advertising to broadcast data, and another device (scanner) may find and connect to it. Advertising data is composed of 31 bytes, and an additional 31 bytes may be transmitted as a scan response to a request for a scan.

Conventional beacon technology can identify the number of connectable devices in the vicinity by utilizing a scan function, and adjust intensity of beacon output based on the identified number. However, in identifying the quantity of peripheral devices during a short period of time while performing the scan function, not only devices actually existing inside the vehicle but also devices existing outside the vehicle are searched together. At this time, among all connectable devices in the vicinity identified by utilizing the scan function of the conventional beacon, it is not possible to distinguish devices inside a specific area from devices outside the specific area. That is, even in a case where it is desired that the beacon installed in the vehicle communicates only with user terminals existing inside the vehicle, there is a problem that the beacon output may be set excessively strong in a case where it is determined that connection is possible with devices existing not only inside the vehicle but also outside the vehicle.

Also, when N user terminals exist inside the vehicle, it should be considered that not only N user terminals simply exist in a space inside the vehicle, but N or more people occupy the space inside the vehicle. That is, an environment where N terminals simply exist in a certain narrow space and an environment where N terminals and N or more people exist are different from each other. Since a wireless signal output by a beacon device installed in a vehicle may be reflected and diffracted by passengers in the vehicle, a problem that intensity of the transmitted signal becomes significantly weaker compared to a space without passengers should also be considered. If the intensity of the beacon signal becomes weak in a situation where the inside of the vehicle is crowded with passengers, data communication between the beacon inside the vehicle and the user terminals may not be smooth, and as a result, the user terminals may not be able to periodically receive the beacon signal. In this case, there is a problem that the transportation service cannot be smoothly performed.

In order to solve these problems, if the beacon signal is always transmitted strongly, another problem occurs due to this. That is, another beacon for emitting a beacon signal to the outside of the vehicle may be installed in the vehicle in order to provide the transportation service or another transportation service related thereto. In the present specification, a beacon designed to transmit a beacon signal to the outside of the vehicle is referred to as an external beacon, and in contrast, a beacon designed to transmit a beacon signal toward the inside of the vehicle may be referred to as an internal beacon or simply a beacon. In this case, outside the vehicle, it may be designed to be desirable for the user terminal to receive only the beacon signal transmitted by the external beacon. Accordingly, if the signal output strength of the beacon (internal beacon) is set too high, the signal transmitted by the beacon (internal beacon) leaks to the outside of the vehicle, and as a result, a problem may occur in which the signal transmitted by the beacon (internal beacon) and the signal transmitted by the external beacon are simultaneously received outside the vehicle.

Therefore, an adaptive signal strength adjustment policy for decreasing the signal strength of the beacon signal transmitted by the beacon (internal beacon) when the number of passengers boarded in the vehicle is small and the congestion level is low, and for increasing the signal strength of the beacon signal transmitted by the beacon (internal beacon) when the number of passengers boarded in the vehicle is large and the congestion level is high, and a technology for realizing the same are required.

### Detailed Description of the Invention

### Technical Problem

In the present invention, a technology is intended to be provided for allowing user terminals possessed by passengers to normally receive a signal transmitted by a beacon installed in a vehicle by identifying a congestion level of passengers inside the vehicle and adjusting beacon signal output intensity installed in the vehicle according to the congestion level.

### Technical Solution

A method for adjusting signal strength of a beacon provided according to an aspect of the present invention may include the steps of: determining the number of passengers in a state of being boarded in a vehicle by counting tag actions based on NFC technology input to a transportation terminal installed in the vehicle, which is a public transportation means, and/or by counting boarding events by a tagless method; determining presence of congestion or a congestion level of the vehicle based on the determined number of passengers; transmitting the determined presence of congestion or congestion level to a beacon module (beacon. Bluetooth) installed in the vehicle through a wired communication (Ethernet, UART, etc.) network within the vehicle; and the beacon module adjusting the signal strength of a beacon signal output by the beacon module based on the transmitted presence of congestion or congestion level. By using such a method for adjusting signal strength of a beacon, a decrease in a reception rate of a beacon signal due to passenger congestion can be prevented.

The boarding event by the tagless method may be an event defined by a technology that does not require a tag action based on the NFC technology.

The boarding event by the tagless method may be an event that is generated when it is determined that a passenger has entered into a vehicle, by determining whether the passenger has entered into the vehicle by using a local positioning technology for determining a relative position of a user terminal with respect to the vehicle. The local positioning technology may be a technology for determining a position of the user terminal by using Bluetooth signals transmitted and received from one or a plurality of Bluetooth devices installed in the vehicle and/or a magnetic field provided to the vehicle in a predetermined manner.

According to an example of a business of a bus service, since a passenger boards by utilizing an NFC function of a transportation card or a smartphone (user terminal), counting of the number of boarded passengers in the vehicle is possible in a transportation terminal. Accordingly, it is possible to adjust beacon output intensity based on the number of people counted by the transportation terminal so that a beacon signal is normally received in an internal space of the vehicle.

According to another aspect of the present invention, a signal strength control method for a beacon signal for controlling signal strength of a beacon signal transmitted by a beacon (1) installed in a vehicle may be provided. The signal strength control method for a beacon signal includes the steps of: a vehicle terminal (2) installed in the vehicle determining a passenger congestion level of the vehicle; and the beacon transmitting the beacon signal at a signal strength determined based on the determined passenger congestion level. At this time, the signal strength determined when the passenger congestion level is greater than a predetermined first threshold is greater than the signal strength determined when the passenger congestion level is less than the first threshold.

The signal strength control method for a beacon signal for controlling signal strength of a beacon signal transmitted by the beacon installed in the vehicle may be referred to as a control method of a vehicle system for controlling signal strength of a beacon signal in a vehicle.

At this time, determining the signal strength may be performed by the vehicle terminal or the beacon.

At this time, the step of determining the passenger congestion level may include the step of the vehicle terminal determining the passenger congestion level by arithmetically combining the number of boarding events for boarding-tagging to a set of NFC tag terminals (3) installed in the vehicle, and the number of alighting events for alighting-tagging to the set of NFC tag terminals.

At this time, the step of determining the passenger congestion level may include: a step of a first user terminal possessed by a first passenger boarded in the vehicle providing a boarding event indicating that the first passenger has boarded the vehicle to a predetermined server if it is determined that the first passenger has boarded the vehicle; a step of the server providing a first boarding event corresponding to the boarding event provided from the first user terminal to the vehicle terminal; and a step of the vehicle terminal increasing the passenger congestion level if the vehicle terminal receives the first boarding event. And if the vehicle terminal acquires a first alighting event indicating that the first passenger has alighted from the vehicle, the vehicle terminal may be configured to decrease the passenger congestion level.

At this time, the signal strength control method for a beacon signal may further include, after the step of increasing the passenger congestion level: a step of the first user terminal providing an alighting event indicating that the first passenger has alighted from the vehicle to the server if it is determined that the first passenger has alighted from the vehicle; a step of the server providing the first alighting event corresponding to the alighting event provided from the first user terminal to the vehicle terminal; and a step of the vehicle terminal decreasing the passenger congestion level if the vehicle terminal receives the first alighting event from the server.

At this time, the step of determining the passenger congestion level may include: a step of the first user terminal possessed by the first passenger boarded in the vehicle providing a first boarding event indicating that the first passenger has boarded the vehicle to the vehicle terminal if it is determined that the first passenger has boarded the vehicle; a step of the vehicle terminal increasing the passenger congestion level if the vehicle terminal receives the first boarding event: a step of the first user terminal providing a first alighting event indicating that the first passenger has alighted from the vehicle to the vehicle terminal if it is determined that the first passenger has alighted from the vehicle; and a step of the vehicle terminal decreasing the passenger congestion level if the vehicle terminal receives the first alighting event.

At this time, the step of providing the first boarding event to the vehicle terminal may include a step of the first user terminal directly transmitting the first boarding event to the vehicle terminal.

At this time, the step of providing the first boarding event to the vehicle terminal may include: a step of the first user terminal transmitting the first boarding event to a predetermined server; and a step of the server transmitting the first boarding event to the vehicle terminal.

At this time, the step of providing the first alighting event to the vehicle terminal may include a step of the first user terminal directly transmitting the first alighting event to the vehicle terminal.

At this time, the step of providing the first alighting event to the vehicle terminal may include: a step of the first user terminal transmitting the first alighting event to a predetermined server; and a step of the server transmitting the first alighting event to the vehicle terminal.

At this time, the step of determining the passenger congestion level may include: a step of the vehicle terminal increasing the passenger congestion level when the vehicle terminal completes transit payment or ticket verification for the first passenger through communication between a first user terminal possessed by the first passenger boarded in the vehicle and the vehicle terminal; a step of the first user terminal providing a first alighting event indicating that the first passenger has alighted from the vehicle to the vehicle terminal if it is determined that the first passenger has alighted from the vehicle; and a step of the vehicle terminal decreasing the passenger congestion level if the vehicle terminal receives the first alighting event.

At this time, the step of providing the first alighting event to the vehicle terminal may include: a step of the first user terminal transmitting the first alighting event to a predetermined server; and a step of the server transmitting the first alighting event to the vehicle terminal.

According to another aspect of the present invention, a signal strength control system for a beacon signal including: a beacon 1 installed in a vehicle; and a vehicle terminal 2 installed in the vehicle; may be provided. At this time, the vehicle terminal is configured to determine a passenger congestion level of the vehicle, and the beacon is configured to transmit the beacon signal at a signal strength determined based on the determined passenger congestion level. And the signal strength determined when the passenger congestion level is greater than a predetermined first threshold is greater than the signal strength determined when the passenger congestion level is less than the first threshold.

The signal strength control system for a beacon signal including the beacon installed in the vehicle and the vehicle terminal may be referred to as a vehicle system.

At this time, the vehicle terminal may be configured to determine the passenger congestion level by arithmetically combining the number of boarding events for boarding-tagging to a set of NFC tag terminals 3 installed in the vehicle, and the number of alighting events for alighting-tagging to the set of NFC tag terminals.

At this time, a first user terminal possessed by a first passenger boarded in the vehicle may be configured to provide a boarding event indicating that the first passenger has boarded the vehicle to a predetermined server if it is determined that the first passenger has boarded the vehicle. And the server may be configured to provide a first boarding event corresponding to the boarding event provided from the first user terminal to the vehicle terminal. And if the vehicle terminal receives the first boarding event from the server, the vehicle terminal may be configured to increase the passenger congestion level. And if the vehicle terminal acquires a first alighting event indicating that the first passenger has alighted from the vehicle, the vehicle terminal may be configured to decrease the passenger congestion level.

### Effects of the Invention

According to the present invention, a technology can be provided for allowing user terminals possessed by passengers to normally receive a signal transmitted by a beacon installed in a vehicle by identifying a congestion level of passengers inside the vehicle and adjusting beacon signal output intensity installed in the vehicle according to the congestion level.

### Brief Description of Drawings

FIG. 1 shows an environment in which a signal strength control method for a beacon signal provided according to an embodiment of the present invention is executed.
FIG. 2 is a flowchart showing a method for controlling signal strength of a beacon signal provided according to an embodiment of the present invention.
FIG. 3 is a flowchart showing a method for determining a passenger congestion level according to an embodiment of the present invention.
FIG. 4 is a flowchart showing a method for determining a passenger congestion level according to another embodiment of the present invention.
FIG. 5 is a flowchart showing a method for determining a passenger congestion level according to still another embodiment of the present invention.
FIG. 6 is a flowchart showing a method for determining a passenger congestion level according to still another embodiment of the present invention.
FIG. 7 is a flowchart showing a transmission method of a beacon signal provided according to an embodiment of the present invention.
FIG. 8 is a flowchart showing a transmission method of a beacon signal provided according to another embodiment of the present invention.
FIG. 9 is a flowchart showing a transmission method of a beacon signal provided according to still another embodiment of the present invention.
FIG. 10 is a flowchart showing a transmission method of a beacon signal provided according to still another embodiment of the present invention.
FIG. 11 is a flowchart showing a transmission method of a beacon signal provided according to still another embodiment of the present invention.

### Mode for Carrying Out the Invention

Hereinafter, embodiments of the present invention will be described with reference to the accompanying drawings. However, the present invention is not limited to the embodiments described in the present specification and may be implemented in various different forms. The terms used in the present specification are for helping the understanding of the embodiments, and are not intended to limit the scope of the present invention. Also, singular forms used hereinafter include plural forms unless the phrases clearly indicate an opposite meaning.

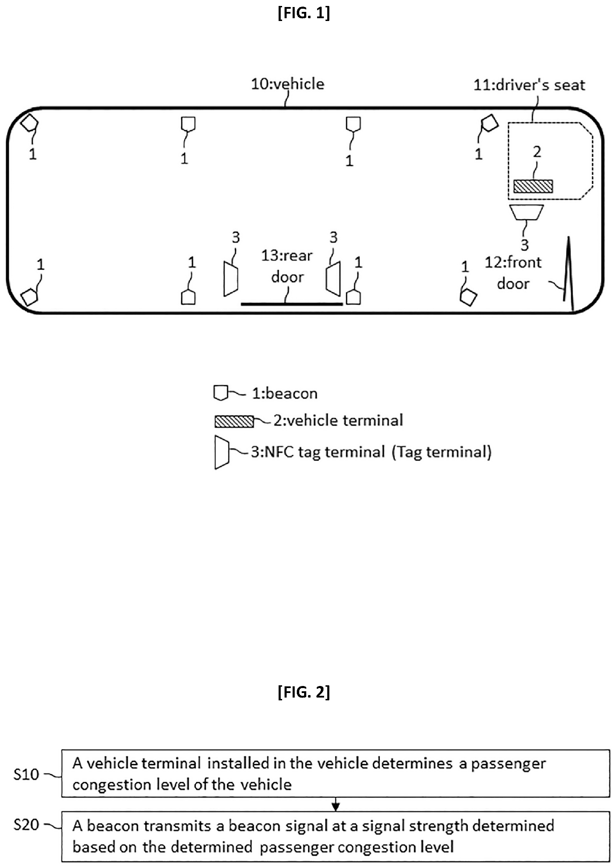

FIG. 1 shows an environment in which a signal strength control method for a beacon signal provided according to an embodiment of the present invention is executed.

One or more beacons 1 may be those installed in a vehicle 10. The vehicle 10 may be, for example, a bus.

One or more entrance/exit doors may be installed in the vehicle 10. For example, a front door 12 and a rear door 13 may be installed in the vehicle 10.

A vehicle terminal 2 is installed in the vehicle 10. For example, the vehicle terminal 2 may be disposed near a driver's seat 11.

One or more NFC tag terminals 3 may be installed near the front door 12 / the rear door 13. The tag terminal :3 is an electronic device configured to be able to tag a user terminal such as a transportation card or a smartphone, and boarding processing and alighting processing may be performed by the tagging action.

The beacons 1 may be installed to transmit a beacon signal toward an inside of the vehicle 10. In an embodiment, the beacon 1 may transmit a directional signal.

One or a plurality of beacons 1 may be installed inside the vehicle 10.

FIG. 2 is a flowchart showing a method for controlling signal strength of a beacon signal provided according to an embodiment of the present invention.

In step 510, the vehicle terminal 2 installed in the vehicle 10 may determine a passenger congestion level of the vehicle 10. A passenger congestion level in a case where there are many passengers in the vehicle may have a larger value than a passenger congestion level in a case where there are few passengers. The value of the passenger congestion level may be determined by embodiments of the present invention to be described later and various other methods.

In step S20, the beacon 1 may transmit the beacon signal at a signal strength determined based on the determined passenger congestion level.

At this time, the signal strength determined when the passenger congestion level is greater than a predetermined first threshold is greater than the signal strength determined when the passenger congestion level is less than the first threshold.

At this time, determining the signal strength may be performed by the vehicle terminal 2. And the determined signal strength may be transferred from the vehicle terminal 2 to the beacon 1.

Alternatively, determining the signal strength may be performed by the beacon 1. The beacon 1 may receive the passenger congestion level from the vehicle terminal 2 in order to determine the signal strength.

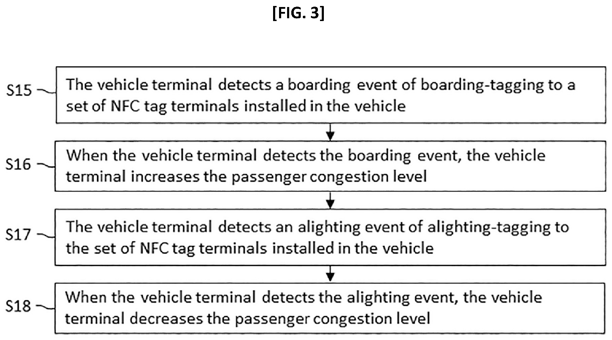

FIG. 3 is a flowchart showing a method for determining a passenger congestion level according to an embodiment of the present invention.

In step S15, the vehicle terminal 2 may detect a boarding event for boarding-tagging to a set of NFC tag terminals 3 installed in the vehicle 10.

In step S16, when the vehicle terminal 2 detects the boarding event, the vehicle terminal 2 may increase the passenger congestion level. That is, a numerical value representing the passenger congestion level may be increased. The numerical value may be a value defined and stored in a register or a memory within the vehicle terminal 2.

In step S17, the vehicle terminal 2 may detect an alighting event for alighting-tagging to the set of NFC tag terminals 3 installed in the vehicle 10.

In step S18, when the vehicle terminal 2 detects the alighting event, the vehicle terminal 2 may decrease the passenger congestion level.

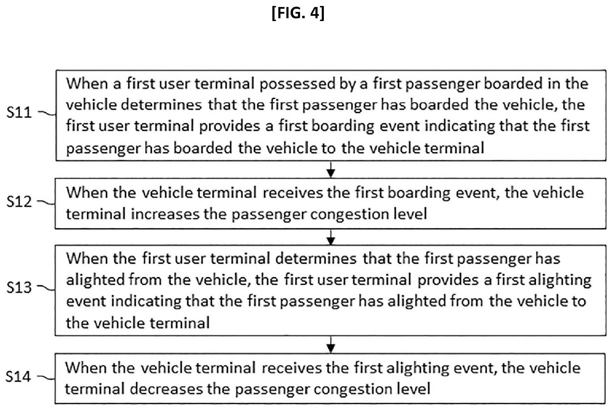

FIG. 4 is a flowchart showing a method for determining a passenger congestion level according to another embodiment of the present invention.

In step S11, when it is determined that a first passenger has boarded the vehicle 10, a first user terminal 4 possessed by the first passenger boarded in the vehicle 10 may provide a first boarding event indicating that the first passenger has boarded the vehicle 10 to the vehicle terminal 2.

In step S12, when the vehicle terminal 2 receives the first boarding event, the vehicle terminal 2 may increase the passenger congestion level.

In step S13, when it is determined that the first passenger has alighted from the vehicle 10, the first user terminal 4 may provide a first alighting event indicating that the first passenger has alighted from the vehicle 10 to the vehicle terminal 2.

In step S14, when the vehicle terminal 2 receives the first alighting event, the vehicle terminal 2 may decrease the passenger congestion level.

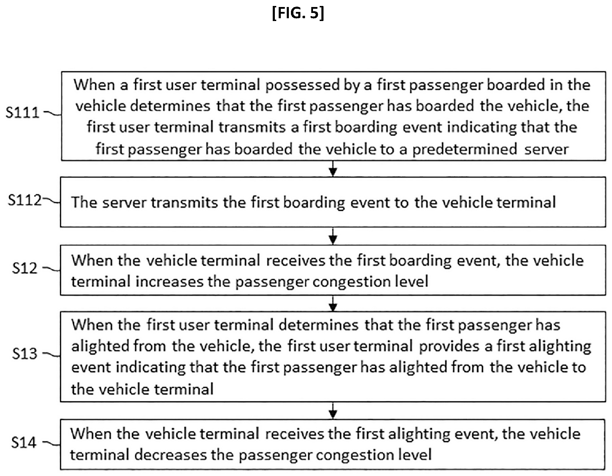

FIG. 5 is a flowchart showing a method for determining a passenger congestion level according to another embodiment of the present invention.

The method shown in FIG. 5 is the same as the method shown in FIG. 4, except that step S11 of FIG. 4 is changed to step S111 and step S112 of FIG. 5.

In step S111, if it is determined that the first passenger has boarded the vehicle, the first user terminal 4 possessed by the first passenger boarded in the vehicle 10 may transmit a first boarding event indicating that the first passenger has boarded the vehicle 10 to a predetermined server 5.

In step S112, the server 5 may transmit the first boarding event to the vehicle terminal 10.

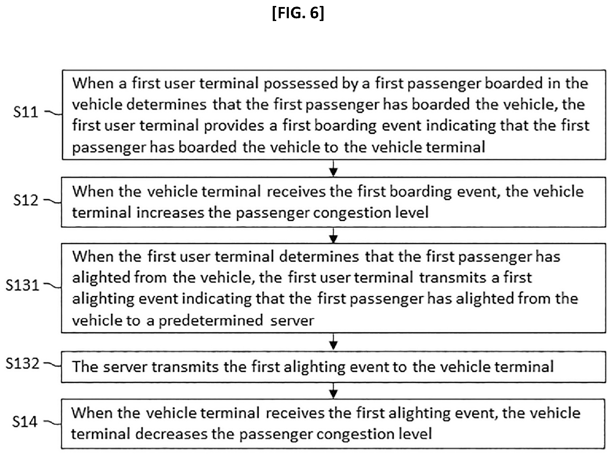

FIG. 6 is a flowchart showing a method for determining a passenger congestion level according to another embodiment of the present invention.

The method shown in FIG. 6 is the same as the method shown in FIG. 4, except that step S13 of FIG. 4 is changed to step S131 and step S132 of FIG. 6.

In step S131, if it is determined that the first passenger has alighted from the vehicle 10, the first user terminal 4 may transmit a first alighting event indicating that the first passenger has alighted from the vehicle 10 to the server 5.

In step S132, the server 5 may transmit the first alighting event to the vehicle terminal 10.

In another modified embodiment of the present invention, the above-described step S111, step S112, step S12, step S131, step S132, and step S14 may be sequentially executed.

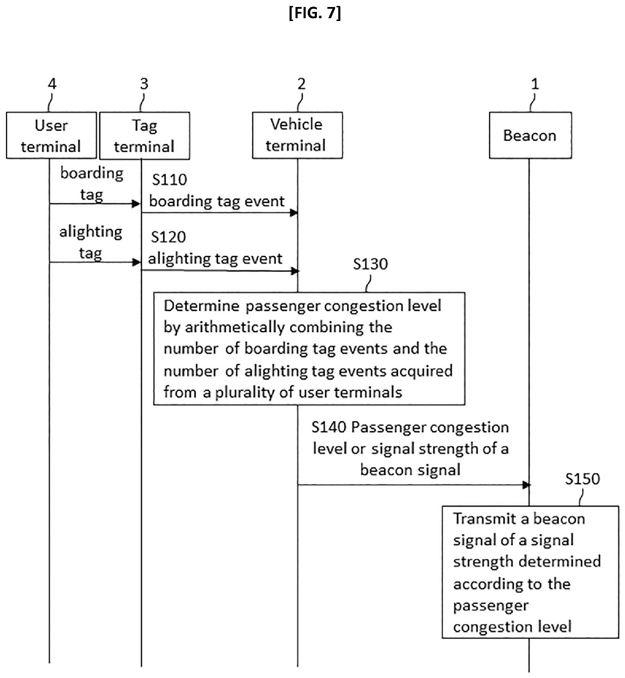

FIG. 7 is a flowchart showing a transmission method of a beacon signal provided according to an embodiment of the present invention.

In step S110, when the tag terminal 3 receives an input of a boarding tag from the user terminal 4, it may transmit information representing a boarding tag event to the vehicle terminal 2.

And in step S120, when the tag terminal 3 receives an input of an alighting tag from the user terminal 4, it may transmit information representing an alighting tag event to the vehicle terminal 2.

In step S130, the vehicle terminal 2 may determine the passenger congestion level by arithmetically combining the number of boarding tag events and the number of alighting tag events acquired from a plurality of user terminals 4. At this time, as the accumulated boarding tag events have a larger value, the value of the passenger congestion level may further increase, and as the accumulated alighting tag events have a larger value, the value of the passenger congestion level may further decrease.

In step S140, the vehicle terminal 2 may transmit the determined passenger congestion level to the beacon 1, or the vehicle terminal 2 may transmit the signal strength of a beacon signal determined based on the passenger congestion level.

In step S150, the beacon 1 may transmit a beacon signal having the signal strength determined according to the passenger congestion level. If the beacon 1 has received the passenger congestion level from the vehicle terminal 2, the beacon 1 may determine the signal strength of the beacon signal based on the passenger congestion level.

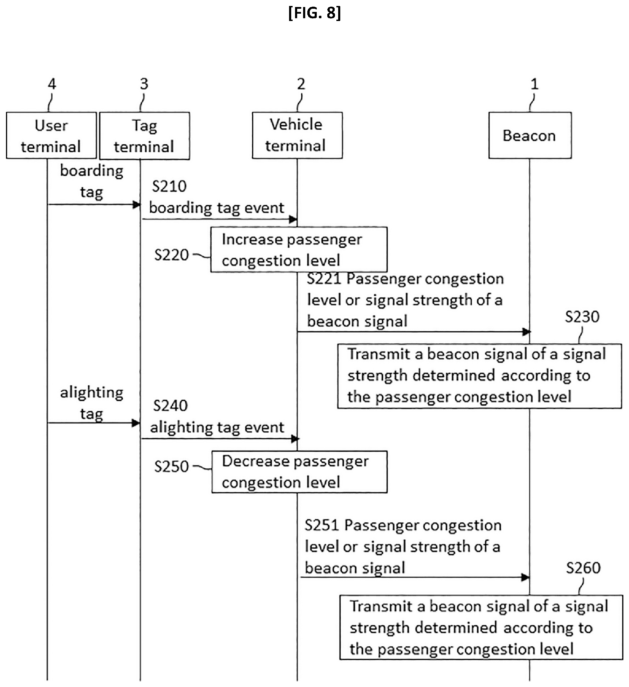

FIG. 8 is a flowchart showing a transmission method of a beacon signal provided according to another embodiment of the present invention.

In step S210, when the tag terminal 3 receives an input of a boarding tag from the user terminal 4, it may transmit information representing a boarding tag event to the vehicle terminal 2.

In step S220, the vehicle terminal 2 may increase the passenger congestion level in response to the received boarding tag event.

In step S221, the vehicle terminal 2 may transmit the passenger congestion level to the beacon 1, or the vehicle terminal 2 may transmit the signal strength of the beacon signal determined based on the passenger congestion level.

In step S230, the beacon 1 may transmit a beacon signal having the signal strength determined according to the passenger congestion level. If the beacon 1 has received the passenger congestion level from the vehicle terminal 2, the beacon 1 may determine the signal strength of the beacon signal based on the passenger congestion level.

In step S240, when the tag terminal 3 receives an input of an alighting tag from the user terminal 4, it may transmit information representing an alighting tag event to the vehicle terminal 2.

In step S250, the vehicle terminal 2 may decrease the passenger congestion level in response to the received alighting tag event.

In step S251, the vehicle terminal 2 may transmit the passenger congestion level to the beacon 1, or the vehicle terminal 2 may transmit the signal strength of the beacon signal determined based on the passenger congestion level.

In step S260, the beacon 1 may transmit a beacon signal having the signal strength determined according to the passenger congestion level. If the beacon 1 has received the passenger congestion level from the vehicle terminal 2, the beacon 1 may determine the signal strength of the beacon signal based on the passenger congestion level.

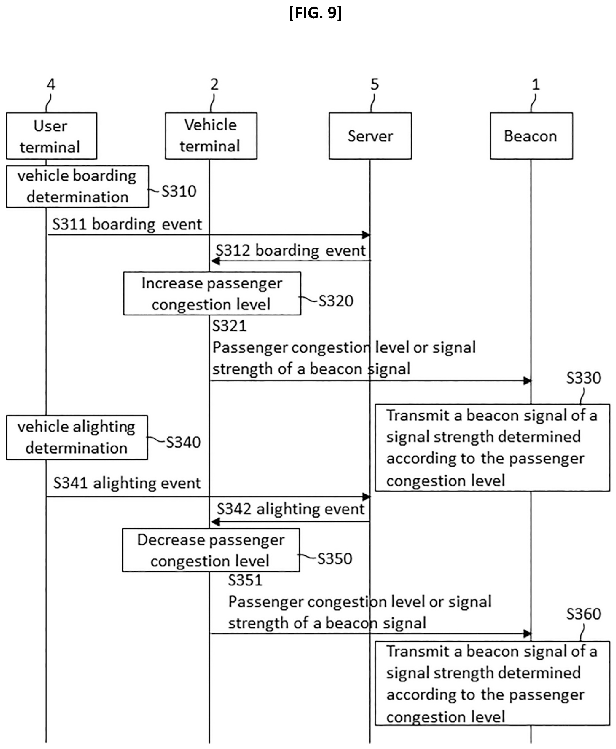

FIG. 9 is a flowchart showing a transmission method of a beacon signal provided according to still another embodiment of the present invention.

In step S310, the user terminal 4 may determine that the user terminal 4 or a passenger possessing the user terminal 4 is in a state of being boarded in the vehicle 10. That is, in step S310, the user terminal 4 may execute a vehicle boarding determination.

That is, the user terminal 4 may be configured to track whether boarding for the vehicle 10 has been made or alighting has been made, and step S310 may be a step executed at a point in time when an alighting state is changed to a boarding state. A specific technology for the tracking is to an extent that can be arbitrarily selected at the current technical level. The specific technology for the tracking may be a technology using the above-mentioned NFC tag terminal, or may be a technology on a premise of not performing an action called tagging.

In step S311, the user terminal 4 may wirelessly provide information called a boarding event generated in response to the vehicle boarding determination to a server 5. In the information called the boarding event that the user terminal 4 provides to the server 5, information capable of specifying the user terminal 4 may be included or may not be included.

In step S312, the server 5 may wirelessly provide information called a boarding event corresponding to a report called the boarding event received from the user terminal 4 to the vehicle terminal 2. At this time, in the information called the boarding event that the server 5 provides to the vehicle terminal 2, information capable of specifying the boarded user terminal may be included or may not be included. The vehicle terminal 2 may determine that one person has boarded when receiving the boarding event once from the server 5.

In step S320, the vehicle terminal 2 may increase the passenger congestion level in response to the boarding event received from the server 5.

In step S321, the vehicle terminal 2 may transmit the passenger congestion level to the beacon 1 or the vehicle terminal 2 may transmit the signal strength of the beacon signal determined based on the passenger congestion level.

In step S330, the beacon 1 may transmit a beacon signal having the signal strength determined according to the passenger congestion level. If the beacon 1 has received the passenger congestion level from the vehicle terminal 2, the beacon 1 may determine the signal strength of the beacon signal based on the passenger congestion level.

In step S340, the user terminal 4 may determine that the user terminal 4 or a passenger possessing the user terminal 4 is in a state of having alighted from the vehicle 10. That is, in step S340, the user terminal 4 may execute a vehicle alighting determination.

Step S340 may be a step executed at a point in time when a boarding state is changed to an alighting state.

At the point in time when the user terminal 4 is changed from the boarding state to the alighting state, the user terminal 4 may already exist outside the vehicle 10 or may exist at a boundary between the inside/outside of the vehicle 10. In this case, the user terminal 4 may be able to directly communicate with the vehicle terminal 2. Therefore, it is necessary to execute step S341 and step S342, which will be described later.

In step S341, the user terminal 4 may provide information called an alighting event to the server 5 in response to the vehicle alighting determination.

In step S342, the server 5 may provide the alighting event provided from the user terminal 4 to the vehicle terminal 2.

In step S350, the vehicle terminal 2 may decrease the passenger congestion level in response to the received alighting event.

In step S351, the vehicle terminal 2 may transmit the passenger congestion level to the beacon 1 or the vehicle terminal 2 may transmit the signal strength of the beacon signal determined based on the passenger congestion level.

In step S360, the beacon 1 may transmit a beacon signal having the signal strength determined according to the passenger congestion level. If the beacon 1 has received the passenger congestion level from the vehicle terminal 2, the beacon 1 may determine the signal strength of the beacon signal based on the passenger congestion level.

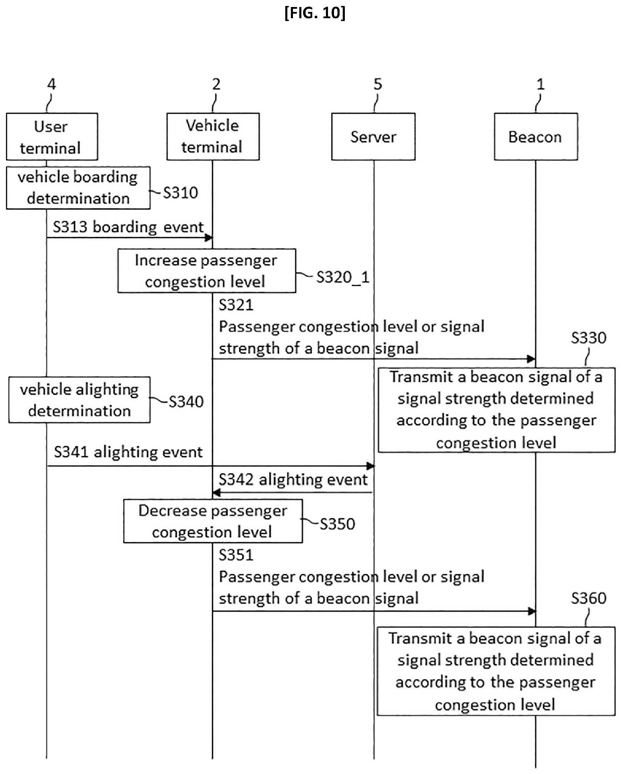

FIG. 10 is a flowchart showing a transmission method of a beacon signal provided according to still another embodiment of the present invention.

The method shown in FIG. 10 is a modification from FIG. 9.

The method of FIG. 10 is the same as the method of FIG. 9, except that step S311 and step S312 of FIG. 9 are replaced by step S313 of FIG. 10. And step S320 of FIG. 9 is replaced by step S320_1 of FIG. 10.

In step S310, the user terminal 4 may determine that the user terminal 4 or the passenger possessing the user terminal 4 is in a state of being boarded in the vehicle 10. That is, in step S310, the user terminal 4 may execute a vehicle boarding determination.

In step S313, the user terminal 4 may wirelessly provide information called a boarding event generated in response to the vehicle boarding determination to the vehicle terminal 2. At this time, the process of wirelessly providing may be performed directly between the user terminal 4 and the vehicle terminal 2, or may be performed indirectly by using another device within the vehicle 10, for example, a repeater, a relay beacon, etc.

In step S320_1, the vehicle terminal 2 may increase the passenger congestion level in response to the boarding event received from the user terminal 4.

Hereinafter, the process from step S321 is the same as the process shown in FIG. 9.

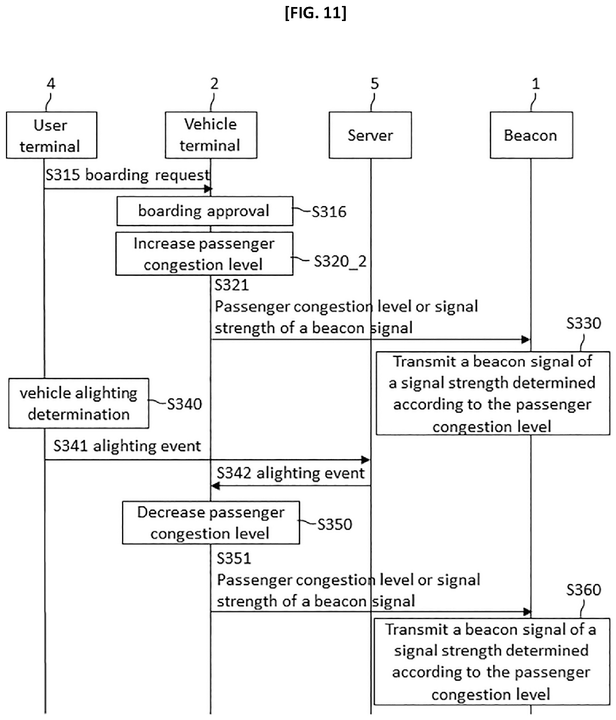

FIG. 11 is a flowchart showing a transmission method of a beacon signal provided according to still another embodiment of the present invention.

The method of FIG. 11 is the same as the method of FIG. 9, except that step S310, step S311, and step S312 of FIG. 9 are replaced with step S315 and step S316 of FIG. 11. And step S320 of FIG. 9 is replaced with step S320_2 of FIG. 11.

In step S315 of the method of FIG. 11, the user terminal 4 utilizes communication with the vehicle terminal 2, and the user terminal 4 may make a boarding request to the vehicle terminal 2.

In step S316, the vehicle terminal 2 may perform boarding approval if the boarding request satisfies a predetermined condition.

The process of performing the boarding approval may be a process in which the vehicle terminal executes transit payment for the first passenger, or may include a process of executing the transit payment.

The process of performing the boarding approval may be a process in which the vehicle terminal executes ticket verification for the first passenger, or may include a process of executing the ticket verification.

The process of performing the boarding approval may include at least one of the process of executing the transit payment and the process of executing the ticket verification.

In step S320_2, the vehicle terminal 2 may increase the passenger congestion level in response to the boarding approval.

Hereinafter, the process from step S321 is the same as the process shown in FIG. 9.

By using the above-described embodiments of the present invention, those skilled in the technical field of the present invention will be able to easily implement various changes and modifications within a range that does not depart from the essential characteristics of the present invention. The content of each claim of the claims may be combined with another claim having no citation relationship within a range that can be understood through the present specification.

### [Description of Symbols]

- 1:: beacon
- 2:: vehicle terminal
- 3:: NFC tag terminal (tag terminal)
- 4:: user terminal
- 10:: vehicle

## Claims

1. A method for controlling signal strength of a beacon signal transmitted by a beacon 1 installed in a vehicle, comprising:
a step of a vehicle terminal 2 installed in the vehicle determining a passenger congestion level of the vehicle;
a step of the vehicle terminal determining signal strength based on the determined passenger congestion level; and
a step of the beacon transmitting the beacon signal at the determined signal strength;
wherein the signal strength determined when the passenger congestion level is greater than a predetermined first threshold is greater than the signal strength determined when the passenger congestion level is less than the first threshold.

2. The method of claim 1, wherein the step of determining the passenger congestion level comprises a step of the vehicle terminal determining the passenger congestion level by arithmetically combining the number of boarding events for boarding-tagging to a set of NFC tag terminals 3 installed in the vehicle and the number of alighting events for alighting-tagging to the set of NFC tag terminals.

3. The method of claim 1,
wherein the step of determining the passenger congestion level comprises:
a step of a first user terminal possessed by a first passenger boarded in the vehicle providing a boarding event indicating that the first passenger has boarded the vehicle to a predetermined server if it is determined that the first passenger has boarded the vehicle;
a step of the server providing a first boarding event corresponding to the boarding event provided from the first user terminal to the vehicle terminal; and
a step of the vehicle terminal increasing the passenger congestion level if the vehicle terminal receives the first boarding event;
wherein, if the vehicle terminal acquires a first alighting event indicating that the first passenger has alighted from the vehicle, the vehicle terminal is configured to decrease the passenger congestion level.

4. The method of claim 3,
further comprising, after the step of increasing the passenger congestion level:
a step of the first user terminal providing an alighting event indicating that the first passenger has alighted from the vehicle to the server if it is determined that the first passenger has alighted from the vehicle;
a step of the server providing the first alighting event corresponding to the alighting event provided from the first user terminal to the vehicle terminal; and
a step of the vehicle terminal decreasing the passenger congestion level if the vehicle terminal receives the first alighting event from the server.

5. The method of claim 1,
wherein the step of determining the passenger congestion level comprises:
a step of a first user terminal possessed by a first passenger boarded in the vehicle providing a first boarding event indicating that the first passenger has boarded the vehicle to the vehicle terminal if it is determined that the first passenger has boarded the vehicle;
a step of the vehicle terminal increasing the passenger congestion level if the vehicle terminal receives the first boarding event;
a step of the first user terminal providing a first alighting event indicating that the first passenger has alighted from the vehicle to the vehicle terminal if it is determined that the first passenger has alighted from the vehicle; and
a step of the vehicle terminal decreasing the passenger congestion level if the vehicle terminal receives the first alighting event.

6. The method of claim 5, wherein the step of providing the first boarding event to the vehicle terminal comprises a step of the first user terminal directly transmitting the first boarding event to the vehicle terminal.

7. The method of claim 5,
wherein the step of providing the first boarding event to the vehicle terminal comprises:
a step of the first user terminal transmitting the first boarding event to a predetermined server; and
a step of the server transmitting the first boarding event to the vehicle terminal.

8. The method of claim 5, wherein the step of providing the first alighting event to the vehicle terminal comprises a step of the first user terminal directly transmitting the first alighting event to the vehicle terminal.

9. The method of claim 5,
wherein the step of providing the first alighting event to the vehicle terminal comprises:
a step of the first user terminal transmitting the first alighting event to a predetermined server; and
a step of the server transmitting the first alighting event to the vehicle terminal.

10. The method of claim 1,
wherein the step of determining the passenger congestion level comprises:
a step of the vehicle terminal increasing the passenger congestion level when the vehicle terminal completes transit payment or ticket verification for the first passenger through communication between a first user terminal possessed by the first passenger boarded in the vehicle and the vehicle terminal;
a step of the first user terminal providing a first alighting event indicating that the first passenger has alighted from the vehicle to the vehicle terminal if it is determined that the first passenger has alighted from the vehicle; and
a step of the vehicle terminal decreasing the passenger congestion level if the vehicle terminal receives the first alighting event.

11. The method of claim 10,
wherein the step of providing the first alighting event to the vehicle terminal comprises:
a step of the first user terminal transmitting the first alighting event to a predetermined server; and
a step of the server transmitting the first alighting event to the vehicle terminal.

12. A signal strength control system for a beacon signal comprising:
a beacon 1 installed in a vehicle; and
a vehicle terminal 2 installed in the vehicle;
wherein the vehicle terminal is configured to determine a passenger congestion level of the vehicle,
any one of the vehicle terminal and the beacon is configured to determine signal strength based on the determined passenger congestion level,
the beacon is configured to transmit a beacon signal at the determined signal strength, and
the signal strength determined when the passenger congestion level is greater than a predetermined first threshold is greater than the signal strength determined when the passenger congestion level is less than the first threshold.

13. The signal strength control system for a beacon signal of claim 12, wherein the vehicle terminal is configured to determine the passenger congestion level by arithmetically combining a number of boarding events for boarding-tagging to a set of NFC tag terminals 3 installed in the vehicle, and a number of alighting events for alighting-tagging to the set of NFC tag terminals.

14. The signal strength control system for a beacon signal of claim 12,
wherein a first user terminal possessed by a first passenger boarded in the vehicle is configured to provide a boarding event indicating that the first passenger has boarded the vehicle to a predetermined server if it is determined that the first passenger has boarded the vehicle,
wherein the server is configured to provide a first boarding event corresponding to the boarding event provided from the first user terminal to the vehicle terminal,
wherein the vehicle terminal is configured to increase the passenger congestion level if the vehicle terminal receives the first boarding event from the server, and wherein the vehicle terminal is configured to decrease the passenger congestion level if the vehicle terminal acquires a first alighting event indicating that the first passenger has alighted from the vehicle.
